Europäisches Patentamt

European Patent Office

Office européen des brevets

(11) Publication number : **0 511 026 A1**

## (12) EUROPEAN PATENT APPLICATION

(21) Application number : 92303788.1

(22) Date of filing : 27.04.92

(51) Int. Cl.⁵ : **H02K 5/173**

(30) Priority : **26.04.91 JP 60284/91**

(43) Date of publication of application :
**28.10.92 Bulletin 92/44**

(84) Designated Contracting States :
**DE FR GB IT**

(71) Applicant : **MABUCHI MOTOR KABUSHIKI
KAISHA
No. 430, Matsuhidai
Matsudo-shi, Chiba-ken (JP)**

(72) Inventor : **Uzawa, Motohisa, Mabuchi Motor K.
K.
No. 430 Matsuhidai
Matsudo-shi, Chiba-ken (JP)**
Inventor : **Hoshino, Michio, Mabuchi Motor K.
K.
No. 430 Matsuhidai
Matsudo-shi, Chiba-ken (JP)**

(74) Representative : **Hitchcock, Esmond Antony
Lloyd Wise, Tregear & Co. Norman House
105-109 Strand
London WC2R 0AE (GB)**

(54) **Miniature motor.**

(57)   The rotor shaft (1) of a miniature electric
motor is restricted in its axial movement by the
use of a radial bearing (16) of which the inner
race (18) is fixedly located on the shaft (1) by
means of a bushing (14) press-fitted on the end
of the shaft which holds the inner race (18)
against a thrust washer (3) of the motor rotor
(17).

FIG. 2

Jouve, 18, rue Saint-Denis, 75001 PARIS

This invention relates to miniature electric motors, and particularly but not exclusively to such motors for use in automobiles to drive various pieces of electrical equipment therein.

Known electric motors used in the applications referred to above accommodate some axial movement of the rotor relative to the motor casing, and any equipment to which it is coupled. This is sought to be minimized by the use of one or more thrust washers, normally disposed between the commutator and a bearing mounted in the motor end cap. Because of manufacturing tolerances however, a thrust washer of suitable thickness has to be selected to achieve optimum results in each case, and this significantly increases the time required for the assembly of each motor.

A miniature motor according to the invention comprises a case and an end cap, and a rotor supported therein in bearings, normally one in each of the case and end cap. One of the bearings is a radial bearing having inner and outer races, the inner race being located on the shaft of the rotor by means of a bushing press-fitted to the shaft and a thrust washer of the rotor.

A preferred application of motors according to the invention is in combination with pump apparatus, particularly automotive exhaust gas purifier pumps. Because of the minimal axial movement of the motor shaft, a very close coupling between the motor and the pump can be achieved. This means that the motor and pump can both operate reliably at high efficiencies, and that smaller units can therefore be used.

The invention will now be described by way of example and with reference to the accompanying schematic drawings wherein:

Figure 1 is a broken sectional view illustrating a miniature motor embodying this invention.

Figure 2 is an enlarged cross-sectional view illustrating the casing bearing in the miniature motor of Figure 1;

Figure 3 is a broken sectional view illustrating a possible use of a miniature motor according to the invention; and

Figure 4 is a broken sectional view illustrating a known motor construction.

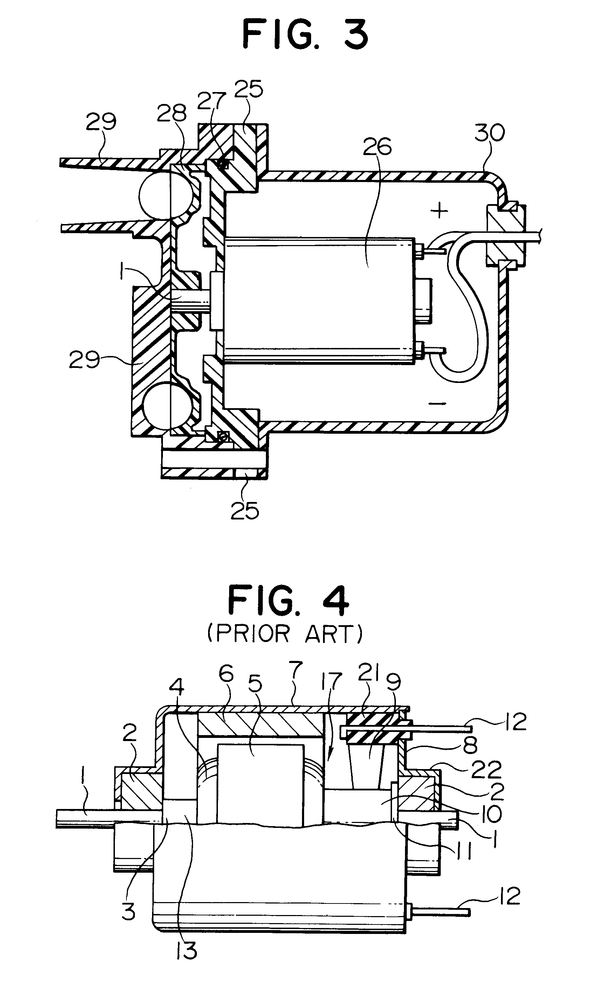

A known electric motor will first be described with reference to Figure 4. The motor has a stator comprising a field magnet 6 in a case 7 closed by an end cap 8 with a rotor supported in bearings 2. One of the bearings 2 is mounted in the end cap 8; the other in the case 7. The rotor consists of a shaft 1, carries a commutator 10, an armature core 5 and an armature coil 4 in the usual way, and is located by means of a positioning bushing 13 and washers 3 and 11. The axial movement of the shaft 1 is restricted by the thrust washer 3.

A motor of this type can be used to drive an automotive exhaust gap purifier pump for example, by connecting a fan or a gear to the output shaft 1. Miniature motors used for such pumps are required to be of a small size without compromise of motor efficiency since such pumps are usually installed in a limited space in automobiles.

In a miniature motor of the kind described above, the thrust gap between the rotor (particularly the positioning bushing 13), and the bearing 2 is defined by the thrust washer 3. A thrust washer 3 of the optimum thickness has therefore to be selected from a plurality of washers of different thicknesses that have been prepared in advance, or a required number of thin thrust washers has to be assembled. This requires the measurement of the gap, the selection and assembly of the thrust washer 3, as well as its fitment, resulting in increased time requirements in manufacture and assembly. Further, a great variety of washers must be available. In addition, completed miniature motors often have different sizes of thrust gaps.

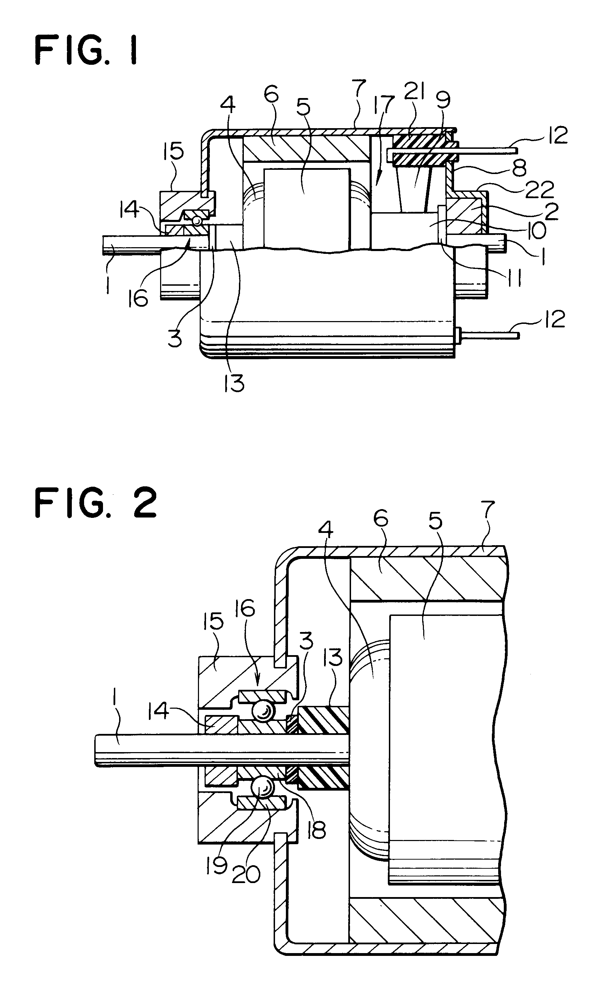

The miniature motor shown in Figure 1 comprises a case 7, an end cap 8, and a rotor 17. The case 7 supports a radial bearing 16, the casing 15 thereof and a field magnet (permanent magnet) 6 of an arc-segment shape. The rotor 17 consists of a shaft 1, a washer 11, a commutator 10, an armature core 5, an armature coil 4, a positioning bushing 13, a thrust-gap adjusting thrust washer 3 and a bushing 14. The end cap 8 supports a bearing 2, and brushes 9, terminals 12, etc., for transmission of electrical power to the commutator 10 on the rotor.

The case 7 is made of a metallic material, such as mild steel, and formed into a hollow cylinder closed at one end. The end cap 8 is made of a similar metallic material to that of the case 7, and fitted to the open end of the case. The terminals 12 are fitted to insulating portions 21 and protrude outwards from the end cap 8. The radial bearing 16 is mounted in a casing 15 fitted to the bottom of the case 7. A cylindrical bearing 2 is mounted in a bearing support 22 which projects from the end cap 8. The radial bearing 16 and the cylindrical bearing 2 support a rotating shaft 1 integrally formed with the rotor 17. The motor is actuated in the usual way by supplying electrical power to the terminals 12.

The construction of the motor around the radial bearing 16 is shown in more detail in Figure 2. The radial bearing 16 has an inner race 18, an outer race 20, and balls 19 provided therebetween. The outer race 20 is held in the casing 15, which is fitted to the closed end of the case 7.

The inner end (to the right as shown in the Figure) of the inner race 18 is in close contact with the thrust washer 3, which in turn engages the positioning bushing 13. An additional bushing 14 is press-fitted to the end of the shaft 1 in such a manner as to come into close contact with the left end of the inner race 18, that is, that the inner race 18 is supported by the bushing 14 and the thrust washer 3. The position of the inner race 18 with respect to the rotating shaft 1 can thus be set to a predetermined position at all time by the washer 3 and bushings 13 and 14.

The bushing 14 is press-fitted to the end of the shaft 1 as the last step of the miniature motor assembly process in such a manner that the positioning bushing 13, the thrust washer 3 and the inner race 18 (the radial bearing 16) come in close contact with each other. As a result, All of them are effectively fixed on the shaft. Since the casing 15 of the radial bearing 16 is securely mounted in the case 7, the relative axial positions of the shaft 1 and the case 7 is kept constant. In other words, the thrust gap between the radial bearing 16 and the rotor 17 is effectively eliminated, without any adjustment being required. Thus, stable miniature motors of a simple construction can be manufactured, involving no thrust gap adjustment. When a fan or a gear is connected to the shaft 1 of the rotor 17, the fan or the gear can be rotated stably without moving in the axial direction. As a result, the air gap between the fan and the fan cover can be designed efficiently. Where a gear is to be connected to the shaft 1, one of small face width can be used because no large face width has to be provided to ensure positive intermeshing.

These technical advantages are particularly apparent when such a miniature motor 26 is used in an automotive exhaust gas purifier pump, as shown in Figure 3. The automotive exhaust purifier pump which is usually installed in automobiles is needed to be as small as possible. This requires the efficiency of the pump to be kept at a high level. To attain this, the gap between the impeller (vortex-flow fan) 28 and the pump cover (having an air inlet and an air outlet) 29 must be reduced to the minimum (though a gap is needed).

When a certain thrust gap is a feature of a miniature motor, the gap between the vortex-flow fan and the pump cover must be larger than this thrust gap. As a result, the efficiency of the pump may be less than optimum, and required pump pressure may not be obtained. To ensure a predetermined level of pump pressure, the size of the pump, including the motor and the vortex pump, has to be increased, with consequent space demands, which lead to other problems.

As shown in Figure 3, the miniature motor 26 is covered by the motor cover 30. The motor cover 30 and the pump cover 27 are fitted to the pump body 25 with screws (not shown). The miniature motor 26 is fixedly fitted to the body 25 with screws (not shown). An O-ring 27 is inserted between the body 25 and the pump cover 29.

The vortex-flow fan 28 is installed at an end (on the side supported by the radial bearing 16) of the shaft 1 of the miniature motor 26. Little gap is left between the vortex-flow fan 28 and the pump cover 29, as shown in the Figure.

When the miniature motor 26 of this invention having no thrust gap is used, the gap between the vortex-flow fan 28 and the pump cover 29 can be reduced to the absolute minimum. By reducing the gap between the vortex-flow fan 28 and the pump cover 29 by 0.1 mm we have found that an approximately 30% improvement in fan efficiency can be achieved. The absence of the thrust gap also eliminates adjusting operations that would otherwise be needed to reduce the gap between the vortex-flow fan 28 and the pump cover 29. Since a predetermined pump pressure can be obtained with the miniature motor 26, a minimum size of motor and pump can be used.

## Claims

1. A miniature motor with a stator comprising a case (7) and an end cap (8), and a rotor (17) supported in bearings (2) therein
   CHARACTERISED IN THAT
   one of the bearings is a radial bearing (16) having inner (18) and outer (20) races, the inner race (18) being located on the shaft (1) of the rotor (17) by means of a bushing (14) press-fitted to the shaft (1) and a thrust washer (3) of the rotor (17).

2. A miniature motor according to Claim 1 wherein the thruxt washer (3) is axially contiguous with a positioning bushing (13) of the rotor (17).

3. A miniature motor according to Claim 1 or Claim 2 wherein the radial bearing (16) is housed in a casing (15) mounted in the case (7).

4. A miniature motor according to any preceding Claim wherein another bearing supporting the rotor (17) is a cylindrical bearing (2).

5. A miniature motor according to Claim 3 and Claim 4 wherein rotor is supported by two bearings (2, 16), the radial bearing (16) being mounted in a closed end of the case (7) and said other bearing (2) being mounted in the end cap (8) of the motor.

6. The combination of a miniature motor according to any preceding Claim and a pump apparatus wherein an impeller (28) of the pump apparatus is installed at the end of the shaft (1) adjacent the radial bearing (16).

# FIG. 1

# FIG. 2

# FIG. 3

# FIG. 4
## (PRIOR ART)

**European Patent Office**

# EUROPEAN SEARCH REPORT

Application Number

EP 92 30 3788

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | CH-A-250 450 (SVENSKA KULLAGERFABRIKEN)<br>* page 1, line 52 - line 61 *<br>* page 3, line 27 - line 49; figures 1,7 * | 1,3,6 | H02K5/173 |
| Y | | 2,4,5 | |
| Y | GB-A-2 071 427 (ROBERT BOSCH)<br>* page 1, line 101 - line 109; figure 1 * | 2 | |
| Y | GB-A-2 086 145 (JIDOSHA DENKI KOGYO)<br>* page 2, line 16 - line 38; figure 1 * | 4,5 | |
| X | FR-A-2 321 209 (S.E.V. MARCHAL ET AL)<br>* page 6, line 14 - page 7, line 13 *<br>* page 7, line 35 - page 8, line 34; figures 1-6 * | 1,3 | |
| | ----- | | TECHNICAL FIELDS SEARCHED (Int. Cl.5)<br><br>H02K |

The present search report has been drawn up for all claims

| Place of search | Date of completion of the search | Examiner |
|---|---|---|
| THE HAGUE | 24 JULY 1992 | TIO K.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)